# EUROPÄISCHE PATENTSCHRIFT

(11) **EP 3 078 030 B1**
(45) Veröffentlichungstag und Bekanntmachung des Hinweises auf die Patenterteilung: **21.02.2018**
(21) Anmeldenummer: 14806250.8
(22) Anmeldetag: 02.12.2014
(51) Int. Cl.: G12B 11/04

(54) **ANZEIGEEINRICHTUNG**
DISPLAY DEVICE
DISPOSITIF D'AFFICHAGE

(30) Priorität: 04.12.2013 DE 102013224895
(43) Veröffentlichungstag der Anmeldung: 12.10.2016
(73) Patentinhaber: Continental Automotive GmbH, 30165 Hannover (DE)
(72) Erfinder: KERN, Thorsten Alexander, 64665 Alsbach (DE); KISSEL, Robert Wolfgang, 63329 Egelsbach (DE); ZOLLER, Ingo, 63768 Hösbach (DE)
(86) Internationale Anmeldenummer: PCT/EP2014/076238
(87) Internationale Veröffentlichungsnummer: WO 2015/082463

(56) Entgegenhaltungen:
- WO-A2-2006/011146
- DE-A1- 10 331 443
- DE-A1-102011 111 543

## Beschreibung

Die Erfindung bezieht sich auf eine Anzeigeeinrichtung mit einer kreisbogenförmigen Skala, an der entlang das freie Ende eines von einem Meßwerk um eine Zeigerachse drehbar antreibbaren Zeigers bewegbar ist.

Bei derartigen Anzeigeeinrichtungen sind auf Leiterplatten montierte, druck- oder lötkontaktierte Messwerke mit integrierten elektromagnetischen Antriebssystemen bekannt, die einen Permanentmagneten, gewickelte Spulen und einen mehr oder weniger komplexen Eisenkreis beinhalten. Die dabei erzeugte Drehbewegung wird über ein ein- oder mehrstufiges Getriebe in eine Bewegung der Zeigerachse umgesetzt. Dies führt zu hohen Herstellkosten. Mittels einer Korrekturkurve für die Ansteuerung muss eine Gleichförmigkeit der Zeigerbewegung erzeugt werden.

Die WO 2006/011146 A2 offenbart eine Anzeigeeinrichtung mit einer kreisboqenförmiqen Skala, an der entlang das freie Ende eines von einem Messwerk um eine Zeigerachse drehbar antreibbaren Zeigers bewegbar ist, wobei auf einer die Zeigerachse direkt oder indirekt antreibenden Achse (0) ein drehbar gelagertes Zahnrad (14) drehfest angeordnet ist, ein Umlaufräderqetriebe, das den Taumelzahnkranz (18) teilweise eingreift, der um die Achse (0) des Zahnrads (14) taumelbar gelagert ist.

Aufgabe der Erfindung ist es daher, eine Anzeigeeinrichtung der eingangs genannten Art zu schaffen, die einen kostengünstigen, einfachen Aufbau mit wenigen Bauteilen aufweist und eine gleichförmige Zeigerbewegung ermöglicht.

Diese Aufgabe wird erfindungsgemäß in einer ersten Ausführung gelöst durch eine Anzeigeeinrichtung mit den Merkmalen des Patentanspruchs 1.

Die Aufgabe wird erfindungsgemäß in einer zweiten Ausführung dadurch gelöst, dass auf einer die Zeigerachse direkt oder indirekt antreibenden Achse ein drehbar gelagerter Innenzahnkranz drehfest angeordnet ist, in dessen Zähne die Verzahnung eines einen kleineren Durchmesser als der Innenzahnkranz aufweisenden Taumelaußenzahnkranzes teilweise eingreift, der um die Achse des Innenzahnkranzes taumelbar gelagert ist, von an seinem Umfang verteilten Federkräften in Eingriffsrichtung der Verzahnung des Taumelaußenzahnkranzes in die Zähne des Innenzahnkranzes beaufschlagt und mit einem in der Umlaufrichtung des Taumelaußenzahnkranzes sich erstreckenden ferromagnetischen Ring fest verbunden ist, mit mindestens zwei Polschuhen, die durch unabhängig voneinander bestrombare Spulen hindurch zur inneren umlaufenden Mantelfläche des ferromagnetischen Rings ragen und mit radialem Spiel zum Ring an dessen Umfang verteilt angeordnet sind

Durch den Antrieb der Achse mittels eines Taumelzahnkranzes oder Taumelaußenzahnkranzes ist mit wenigen einfachen Bauteilen eine hohe Getriebeübersetzung möglich, die zu einer gleichförmigen Zeigerbewegung führt.

Sind Taumelzahnkranz oder Taumelaußenzahnkranz einteilig mit dem ferromagnetischen Ring ausgebildet, so führt dies zu einer kostengünstigen Reduzierung der Bauteile und einer Montagevereinfachung.

Eine weitere Bauteilreduzierung und Reduzierung des Montageaufwandes wird dadurch erreicht, dass die Spulen auf eine Leiterplatte aufgebrachte Planarspulen sind, die Durchführöffnungen in der Leiterplatte umschließen, durch die die Polschuhe hindurchragen. Dies reduziert auch die Baugröße der Anzeigeeinrichtung. Dabei ist die die Spulen tragende Leiterplatte gleichzeitig ein integraler Bestandteil des Messwerks.

Je nach den vorhandenen Platzverhältnissen können das Zahnrad und der Taumelradkrant oder der Innenzahnkranz und der Taumelaußenzahnkranz Stirnzahnräder oder Kegelzahnräder sein.

Zu einer die Anzahl der Bauteile und damit auch den Montageaufwand verringernden Ausbildung führt es, wenn die Polschuhe mit einer Polplatte verbunden sind, die sich annähernd rechtwinklig zu den Polschuhen erstreckt wobei Polschuhe und Polplatte einteilig ausgebildet sein können.

Je nach Platzverhältnissen können die Polschuhe sich zumindest annähernd rechtwinklig zur Zahneingriffsrichtung von Taumelzahnkranz bzw. Taumelaußenzahnkranz in das Zahnrad bzw. das Innenzahnkranz oder sich zumindest annähernd gleichgerichtet zur Zahneingriffsrichtung von Taumelzahnkranz bzw. Taumelaußenzahnkranz in das Zahnrad bzw. das Innenzahnkranz erstrecken.

Zur einfachen Sicherstellung des Eingriffs des Taumelzahnkranzes oder des Taumelaußenzahnkranzes in die Zähne des Zahnrads kann der Taumelzahnkranz bzw. der Taumelaußenzahnkranz über ein oder mehrere elastische Elemente auf seiner der Eingriffsseite der Verzahnung des Taumelzahnkranzes in die Zähne des Zahnrads abgewandten Seite abgestützt sein.

Dabei kann der Taumelzahnkranz bzw. der Taumelaußenzahnkranz über den ferromagnetischen Ring an den elastischen Elementen in Anlage sein.

Um eine hohe Robustheit gegenüber Montageeinflüssen zu erreichen kann das Messwerk aus Zahnrad, Achse, Taumelzahnkranz, ferromagnetischem Ring und elastischen Elementen in einem Gehäuse angeordnet, insbesondere das Messwerk von dem Gehäuse gekapselt sein.
Zur Trennung der Polschuhe von dem Inneren des Gehäuses kann dabei der Boden die in das Gehäuseinnere ragenden Polschuhe aufnehmende Taschen aufweisen.

Zu einem raumsparenden, kompakten Aufbau führt es dabei, wenn an der dem Inneren des Gehäuses abgewandten Seite des Bodens die Leiterplatte in Anlage ist, wobei vorzugsweise auf der dem Gehäuse abgewandten Seite der Leiterplatte die Polplatte angeordnet sein kann.

Zum mechanischen Schutz sind vorzugsweise Leiterplatte und/oder Polplatte ganz oder teilweise mit einer Kunststoffumspritzung versehen.

Ausführungsbeispiele der Erfindung sind in der Zeichnung dargestellt und werden im Folgenden näher beschrieben. Es zeigen:
- Figur 1: eine perspektivische Darstellung des grundsätzlichen Aufbaus einer Anzeigeeinrichtung,
- Figur 2: ein erstes Ausführungsbeispiel einer Anzeigeeinrichtung im Querschnitt,
- Figur 3: ein zweites Ausführungsbeispiel einer Anzeigeeinrichtung im Querschnitt,
- Figur 4: ein drittes Ausführungsbeispiel einer Anzeigeeinrichtung im Querschnitt,
- Figur 5: ein viertes Ausführungsbeispiel einer Anzeigeeinrichtung im Querschnitt,
- Figur 6: ein fünftes Ausführungsbeispiel einer Anzeigeeinrichtung im Querschnitt,
- Figur 7: ein sechstes Ausführungsbeispiel einer Anzeigeeinrichtung im Querschnitt,
- Figur 8: eine perspektivische Ansicht einer Leiterplatte.

Die in den Figuren dargestellten Anzeigeeinrichtungen weisen eine drehbar gelagerte Achse 1 auf, auf der ein Zahnrad 2 fest angeordnet ist. In einen Teil der Zähne des Zahnrades 2 greifen die Zähne eines einen Innenzahnkranz bildenden Taumelzahnkranzes 3 ein, der einen größeren Innendurchmesser als das Zahnrad 2 aufweist. Der drehfeste Taumelzahnkranz 3 ist an einer nicht die Zahnung aufweisenden Ringfläche mit einem ferromagnetischen Ring 4 versehen, der sich über elastische Elemente 5 an in Taschen 7 eines Bodens 6 angeordneten Polschuhen 8 derart abstützt, dass der Taumelzahnkranz 3 sich taumelnd um das Zahnrad bewegen kann.

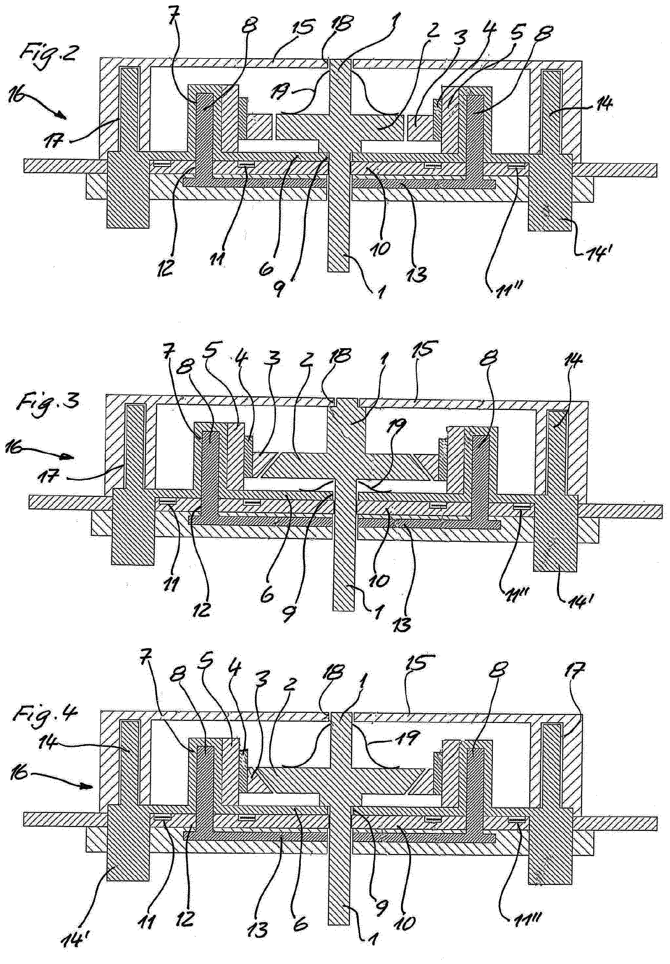

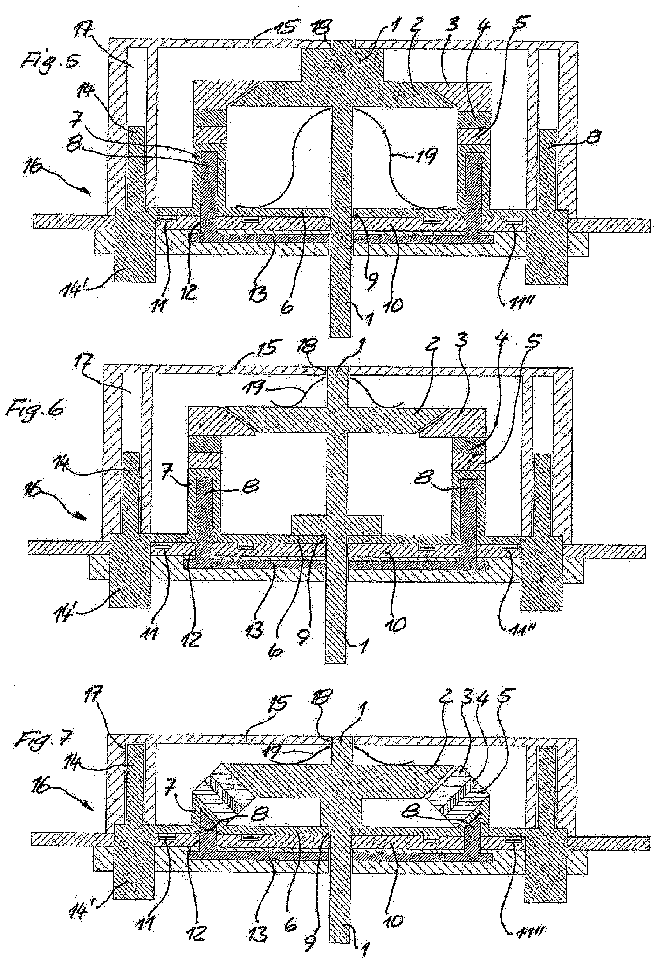

Zahnrad 2 und Taumelzahnkranz 3 besitzen unterschiedliche Zähnezahl, so dass bei einer sich kreisförmig umlaufenden Taumelbewegung des drehfesten Taumelzahnkranzes 3 das Zahnrad 2 zu einer Drehbewegung angetrieben wird. Die Polschuhe 8 erstrecken sich annähernd rechtwinklig (Figuren 2, 3, 4) oder gleichgerichtet (Figuren 5, 6, 7) zur Zahneingriffsrichtung des Taumelzahnkranzes in das Zahnrad 2.

Der als Kunststoffspritzgussteil ausgebildete plattenartige Boden 6 erstreckt sich parallel zum Zahnrad 2 und weist eine erste Lageröffnung 9 auf, in der die Achse 1 auf der einen Seite des Zahnrads 2 drehbar gelagert ist.

An der dem Zahnrad 2 abgewandten Seite des Bodens 6 liegt eine Leiterplatte 10 an, auf der an ihrer dem Boden zugewandten Seite drei Planarspulen 11 aufgebracht sind. Mittig innerhalb jeder Planarspule 11 ist eine Durchführöffnung 12 in der Leiterplatte 10 ausgebildet, durch die jeweils einer der Polschuhe 8 hindurch in eine der Taschen 7 des Bodens 6 ragt.

Polschuhe 8, Taschen 7, Durchführöffnungen und Planarspulen 11 sind auf einem Halbkreis 20 gleichmäßig verteilt angeordnet.

Auf der dem Zahnrad 2 abgewandten Seite der Leiterplatte 10 sind die Polschuhe 8 durch eine sich rechtwinklig zu den Polschuhen 8 erstreckenden Polplatte 13 zu einem einzigen Bauteil miteinander verbunden, wobei die Polplatte 13 sich parallel zur Leiterplatte 10 erstreckt.

Der Boden 6 besitzt radial außerhalb der Taschen 7 Befestigungszapfen 14, 14', die sich parallel zur Achse 1 beidseitig zur Ebene des Bodens 6 erstrecken.

Das aus Zahnrad 2, Achse 1, Taumelzahnkranz 3, ferromagnetischem Ring 4 und elastischen Elementen 5 bestehende Messwerk ist in einem Gehäuse 16 eingekapselt, das aus dem Boden 6 und einem topfartigen Deckel 15 besteht. In der radial umlaufenden Wand des Deckels 15 sind Befestigungsausnehmungen 17 ausgebildet, die zum Öffnungsrand der Wand des Deckels 15 offen sind. Zum Schließen des Gehäuses 16 wird der Deckel 15 bis zur Anlage seines Öffnungsrandes an dem Boden 6 über das Messwerk gestülpt, wobei die Befestigungszapfen 14 klemmend in die Befestigungsausnehmungen 17 eingeführt werden.

Es versteht sich, dass auch andere geeignete Verbindungsarten zur Verbindung des Deckels 15 mit dem Boden 6 sowie der Leiterplatte 10 mit dem Boden 6 anwendbar sind.

Gleichzeitig wird das der Leiterplatte 10 abgewandte freie Ende der Achse 1 in eine im Boden des Deckels 15 ausgebildete zweite Lageröffnung 18 eingeführt, in der die Achse 2 drehbar gelagert ist.

Durch eine am Boden des Deckels 15 bzw. am Boden 6 abgestützte und das Zahnrad 2 beaufschlagende Druckfeder 19 wird die Achse 2 zur Abstützung an dem Boden 6 bzw. dem Boden des Deckels 15 beaufschlagt und damit axial definiert im Gehäuse 16 positioniert.

Die Polplatte 13 ist parallel zur Leiterplatte 10 plattenartig mit einer Kunststoffumspritzung 21 versehen, die auch die dem Zahnrad 2 abgewandten Enden der Befestigungszapfen 14' des Bodens 6 umschließt.

Bei dem Ausführungsbeispiel der Figur 2 sind Zahnrad 2 und Taumelradkranz 3 Stirnzahnräder, wobei der Taumelzahnkranz 3, der ferromagnetische Ring 4 und die elastischen Elemente 5 radial zum Zahnrad 2 angeordnet und als miteinander verbundene Bauteilgruppe radial an den Taschen 7 des Bodens 6 befestigt sind.

Bis auf die Ausbildung von Zahnrad 2 und Taumelradkranz 3 als Kegelzahnräder entspricht der Aufbau der Figuren 3 und 4 der Figur 2, wobei in Figur 3 die Zähne des Zahnrads 2 schräg von dem Boden 6 weg und in Figur 4 schräg zum Boden 6 hin gerichtet sind.

In den Figuren 5 und 6 entsprechen die Zahnräder 2 und Taumelradkränze 3 denen der Figuren 3 und 4.

Die Taumelzahnkränze 3 sind aber axial zur Achse 1 über den ferromagnetischen Ring 4 und die elastischen Elemente 5 mit der freien Stirnseite der Taschen 7 des Bodens 6 verbunden.

In Figur 7 sind Zahnrad 2 und Taumelzahnkranz 3 entsprechend Figur 4 als Kegelräder ausgebildet. Entsprechend deren Kegelneigung ist der Taumelzahnkranz 3 über den ferromagnetischen Ring 4 und die elastischen Elemente 5 mit den Taschen 7 des Bodens 6 verbunden.

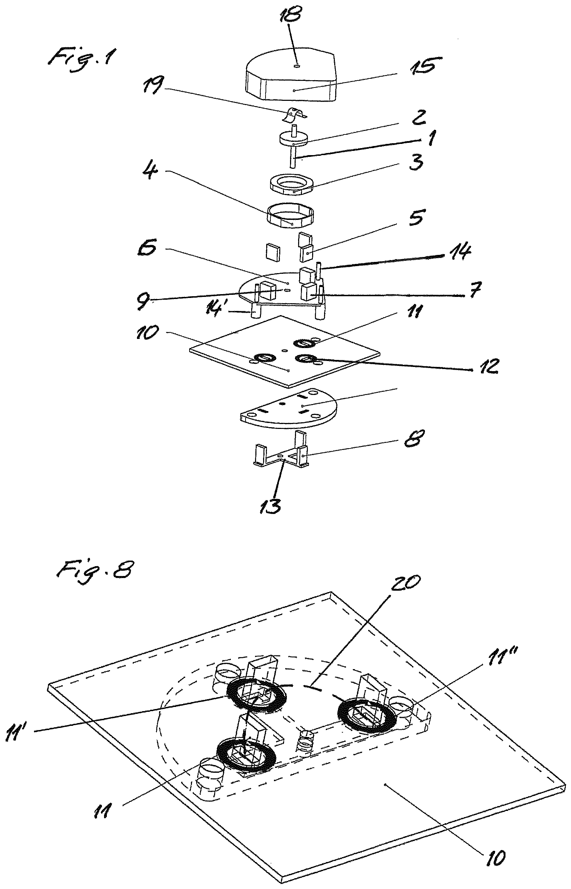

Wie in Figur 8 zu sehen ist, sind auf der Leiterplatte 10 die Planarspulen 11 über einen Halbkreis 20 gleichmäßig verteilt angeordnet und werden von den Polschuhen 8 durchragt. Von einer nicht dargestellten Steuereinheit werden die Planarspulen 11 derart unterschiedlich bestromt, dass an den Polschuhen 8 entsprechend unterschiedliche Magnetfelder auf den ferromagnetischen Ring 4 wirken und diesen entsprechend unterschiedlich gegen die Kraft der elastischen Elemente 5 aus seiner dargestellten Neutrallage auslenken. Entsprechend wird auch der Taumelzahnkranz 3 ausgelenkt.

In der Nullage der Achse 1 ist die am linken Ende des Halbkreises 20 befindliche Planarspule 11 mit dem stärksten Strom und die am rechten Ende des Halbkreises 20 befindliche Planarspule 11" mit dem schwächsten Strom sowie die mittlere Planarspule 11' mit einem mittleren Strom beaufschlagt.

Wird nun die Strombeaufschlagung der linken Planarspule 11 im gleichen Maß erhöht wie die der rechten Planarspule 11" verringert wird, so ändern sich auch entsprechend deren Magnetfelder, was zu einer Taumelbewegung des ferromagnetischen Rings 4 und mit ihm des Taumelzahnkranzes 3 entlang des Halbkreises 20 führt. Dadurch wird von dem Taumelzahnkranz 3 das Zahnrad 2 zu einer Drehbewegung angetrieben, die über die ebenfalls drehende Achse 1 auf eine nicht dargestellte Zeigerachse übertragen wird. Der auf der Zeigerachse angeordnete Zeiger bewegt sich dann entsprechend entlang einer ebenfalls nicht dargestellten bogenförmigen Skala.

## Patentansprüche

1. Anzeigeeinrichtung mit einer kreisbogenförmigen Skala, an der entlang das freie Ende eines von einem Messwerk um eine Zeigerachse drehbar antreibbaren Zeigers bewegbar ist, wobei auf einer die Zeigerachse direkt oder indirekt antreibenden Achse (1) ein drehbar gelagertes Zahnrad (2) drehfest angeordnet ist, in dessen Zähne die Verzahnung eines einen größeren Durchmesser als das Zahnrad (2) aufweisenden Taumelzahnkranzes (3) teilweise eingreift, der um die Achse (1) des Zahnrads (2) taumelbar gelagert ist, **dadurch gekennzeichnet, dass** der Taumelzahnkranz (3)von an seinem Umfang verteilten Federkräften in Eingriffsrichtung der Verzahnung des Taumelzahnkranzes (3) in die Zähne des Zahnrads (2) beaufschlagt und mit einem in die Umlaufrichtung des Taumelzahnkranzes (3) sich erstreckenden ferromagnetischen Ring (4) fest verbunden ist, mit mindestens zwei Polschuhen (8), die durch unabhängig voneinander bestrombare Spulen hindurch zur äußeren umlaufenden Mantelfläche des ferromagnetischen Rings (4) ragen und mit radialem Spiel zum ferromagnetischen Ring (4) an dessen Umfang verteilt angeordnet sind.

2. Anzeigeeinrichtung mit einer kreisbogenförmigen Skala, an der entlang das freie Ende eines von einem Messwerk um eine Zeigerachse drehbar antreibbaren Zeigers bewegbar ist, **dadurch gekennzeichnet, dass** auf einer die Zeigerachse direkt oder indirekt antreibenden Achse ein drehbar gelagerter Innenzahnkranz drehfest angeordnet ist, in dessen Zähne die Verzahnung eines einen kleineren Durchmesser als der Innenzahnkranz aufweisenden Taumelaußenzahnkranzes teilweise eingreift, der um die Achse des Innenzahnkranzes taumelbar gelagert ist, von an seinem Umfang verteilten Federkräften in Eingriffsrichtung der Verzahnung des Taumelaußenzahnkranzes in die Zähne des Innenzahnkranzes beaufschlagt und mit einem in der Umlaufrichtung des Taumelaußenzahnkranzes sich erstreckenden ferromagnetischen Ring fest verbunden ist, mit mindestens zwei Polschuhen, die durch unabhängig voneinander bestrombare Spulen hindurch zur inneren umlaufenden Mantelfläche des ferromagnetischen Rings ragen und mit radialem Spiel zum Ring an dessen Umfang verteilt angeordnet sind.

3. Anzeigeeinrichtung nach einem der vorhergehenden Ansprüche, **dadurch gekennzeichnet, dass** Taumelzahnkranz (3) oder Taumelaußenzahnkranz einteilig mit dem ferromagnetischen Ring (4) ausgebildet sind.

4. Anzeigeeinrichtung nach einem der vorhergehenden Ansprüche, **dadurch gekennzeichnet, dass** die Spulen auf eine Leiterplatte aufgebrachte Planarspulen (11, 11', 11") sind, die Durchführöffnungen (12) in der Leiterplatte (10) umschließen, durch die die Polschuhe (8) hindurchragen.

5. Anzeigeeinrichtung nach einem der vorhergehenden Ansprüche, **dadurch gekennzeichnet, dass** das Zahnrad (2) und der Taumelradkranz (3) oder der Innenzahnkranz und der Taumelaußenzahnkranz Stirnzahnräder sind.

6. Anzeigeeinrichtung nach einem der Ansprüche 1 bis 3, **dadurch gekennzeichnet, dass** das Zahnrad (2) und der Taumelradkranz (3) oder der Innenzahnkranz und der Taumelaußenzahnkranz Kegelzahnräder sind.

7. Anzeigeeinrichtung nach einem der vorhergehenden Ansprüche, **dadurch gekennzeichnet, dass** die Polschuhe (8) mit einer Polplatte (13) verbunden sind, die sich annähernd rechtwinklig zu den Polschuhen (8) erstreckt.

8. Anzeigeeinrichtung nach Anspruch 7, **dadurch gekennzeichnet, dass** Polschuhe (8) und Polplatte (13) einteilig ausgebildet sind.

9. Anzeigeeinrichtung nach einem der vorhergehenden Ansprüche, **dadurch gekennzeichnet, dass** die Polschuhe (8) sich zumindest annähernd rechtwinklig zur Zahneingriffsrichtung von Taumelzahnkranz (3) bzw. Taumelaußenzahnkranz in das Zahnrad (2) bzw. das Innenzahnkranz erstrecken.

10. Anzeigeeinrichtung nach einem der Ansprüche 1 bis 8, **dadurch gekennzeichnet, dass** die Polschuhe (8) sich zumindest annähernd gleichgerichtet zur Zahneingriffsrichtung von Taumelzahnkranz (3) bzw. Taumelaußenzahnkranz in das Zahnrad (2) bzw. das Innenzahnkranz erstrecken.

11. Anzeigeeinrichtung nach einem der vorhergehenden Ansprüche, **dadurch gekennzeichnet, dass** der Taumelzahnkranz (3) bzw. der Taumelaußenzahnkranz über ein oder mehrere elastische Elemente (5) auf seiner der Eingriffsseite der Verzahnung des Taumelzahnkranzes (3) in die Zähne des Zahnrads (2) abgewandten Seite abgestützt ist.

12. Anzeigeeinrichtung nach Anspruch 11, **dadurch gekennzeichnet, dass** der Taumelzahnkranz (3) bzw. der Taumelaußenzahnkranz über den ferromagnetischen Ring (4) an den elastischen Elementen (5) in Anlage ist.

13. Anzeigeeinrichtung nach einem der vorhergehenden Ansprüche, **dadurch gekennzeichnet, dass** das Messwerk aus Zahnrad (2), Achse (1), Taumelzahnkranz (3), ferromagnetischem Ring (4) und elastischen Elementen (5) in einem Gehäuse (16) angeordnet sind.

14. Anzeigeeinrichtung nach Anspruch 13, **dadurch gekennzeichnet, dass** das Messwerk von dem Gehäuse (16) gekapselt ist.

15. Anzeigeeinrichtung nach einem der Ansprüche 13 und 14, **dadurch gekennzeichnet, dass** das Gehäuse (16) aus einem Boden (6) und einem Deckel (15) besteht.

16. Anzeigeeinrichtung nach Anspruch 15, **dadurch gekennzeichnet, dass** der Boden (6) die in das Gehäuseinnere ragenden Polschuhe (8) aufnehmende Taschen (7) aufweist.

17. Anzeigeeinrichtung nach einem der Ansprüche 15 und 16, **dadurch gekennzeichnet, dass** an der dem Inneren des Gehäuses (16) abgewandten Seite des Bodens (6) die Leiterplatte (10) in Anlage ist.

18. Anzeigeeinrichtung nach Anspruch 17, **dadurch gekennzeichnet, dass** auf der dem Gehäuse (16) abgewandten Seite der Leiterplatte (10) die Polplatte (13) angeordnet ist.

19. Anzeigeeinrichtung nach einem der Ansprüche 17 und 18, **dadurch gekennzeichnet, dass** Leiterplatte (10) und/oder Polplatte (13) ganz oder teilweise mit einer Kunststoffumspritzung (21) versehen sind.

## Claims

1. Display device having a scale the shape of a circular arc, along which the free end of an indicator which is rotatably drivable about an indicator axis is movable, wherein a rotatably mounted gear wheel (2) is disposed so as to be rotationally fixed on an axle (1) which directly or indirectly drives the indicator axis, the toothing of a tumbling gear ring (3) having a diameter which is larger than that of the gear wheel (2) partially engaging in the teeth of said gear wheel (2), said tumbling gear ring (3) being mounted so as to be capable of tumbling about the axle (1) of the gear wheel (2), **characterized in that** the tumbling gear ring (3) is impinged by spring forces which are distributed across the circumference of the former and act in the engagement direction of the toothing of the tumbling gear ring (3) with the teeth of the gear wheel (2) and is fixedly connected to a ferromagnetic ring (4) which extends in the circumferential direction of the tumbling gear ring (3), having at least two pole shoes (8) which protrude through coils, which are capable of being energized in a mutually independent manner, to the external revolving girthed area of the ferromagnetic ring (4) and, having a radial clearance in relation to the ferromagnetic ring (4), are distributed on the circumference of the latter.

2. Display device having a scale the shape of a circular arc, along which the free end of an indicator which is rotatably drivable about an indicator axis is movable, **characterized in that** a rotatably mounted internal gear ring is disposed so as to be rotationally fixed on an axle which directly or indirectly drives the indicator axis, the toothing of a tumbling external gear ring having a smaller diameter than the internal gear ring partially engaging in the teeth of said internal gear ring, said tumbling external gear ring being mounted so as to be capable of tumbling about the axis of the internal gear ring, and said tumbling external gear ring being impinged by spring forces which are distributed across the circumference of the former and act in the engagement direction of the toothing of the tumbling external gear ring with the teeth of the internal gear ring and being fixedly connected to a ferromagnetic ring which extends in the circumferential direction of the tumbling external gear ring, having at least two pole shoes which protrude through coils, which are capable of being energized in a mutually independent manner, to the internal revolving girthed area of the ferromagnetic ring and, having a radial clearance in relation to the ring, are distributed on the circumference of the latter.

3. Display device according to one of the preceding claims, **characterized in that** the tumbling gear ring (3) or the tumbling external gear ring are configured so as to be integral with the ferromagnetic ring (4).

4. Display device according to one of the preceding claims, **characterized in that** the coils are planar coils (11, 11', 11") which are attached to a conductor board and which enclose passage openings (12) in the conductor board (10), the pole shoes (8) protruding therethrough.

5. Display device according to one of the preceding claims, **characterized in that** the gear wheel (2) and the tumbling gear ring (3) or the internal gear ring and the tumbling external gear ring are spur gears.

6. Display device according to one of Claims 1 to 3, **characterized in that** the gear wheel (2) and the tumbling gear ring (3) or the internal gear ring and the tumbling outer gear ring are bevel gears.

7. Display device according to one of the preceding claims, **characterized in that** the pole shoes (8) are connected to a pole plate (13) which extends approximately perpendicularly to the pole shoes (8).

8. Display device according to Claim 7, **characterized in that** the pole shoes (8) and the pole plate (13) are configured so as to be integral.

9. Display device according to one of the preceding claims, **characterized in that** the pole shoes (8) extend at least approximately perpendicularly to the tooth engagement direction of the tumbling gear ring (3) or of the tumbling external gear ring with the gear wheel (2) or the internal gear ring, respectively.

10. Display device according to one of Claims 1 to 8, **characterized in that** the pole shoes (8) extend so as to be at least approximately identically aligned in relation to the tooth engagement direction of the tumbling gear ring (3) or of the tumbling external gear ring, respectively, with the gear wheel (2) or the internal gear ring, respectively.

11. Display device according to one of the preceding claims, **characterized in that** the tumbling gear ring (3) or the tumbling external gear ring, respectively, on that side thereof that faces away from the engagement side of the toothing of the tumbling gear ring (3) with the teeth of the gear wheel (2), is supported by one or a plurality of elastic elements (5).

12. Display device according to Claim 11, **characterized in that** the tumbling gear ring (3) or the tumbling external gear ring, respectively, by way of the ferromagnetic ring (4) bears on the elastic elements (5).

13. Display device according to one of the preceding claims, **characterized in that** the meter movement composed of the gear wheel (2), the axle (1), the tumbling gear ring (3), the ferromagnetic ring (4), and the elastic elements (5) is disposed in a housing (16).

14. Display device according to Claim 13, **characterized in that** the meter movement is encapsulated by the housing (16) .

15. Display device according to one of Claims 13 and 14, **characterized in that** the housing (16) is composed of a base (6) and of a cover (15).

16. Display device according to Claim 15, **characterized in that** the base (6) has pockets (7) which receive the pole shoes (8) protruding into the interior of the housing.

17. Display device according to one of Claims 15 and 16, **characterized in that** the conductor board (10) bears on that side of the base (6) that faces away from the interior of the housing (16).

18. Display device according to Claim 17, **characterized in that** the pole plate (13) is disposed on that side of the conductor board (10) that faces away from the housing (16) .

19. Display device according to one of Claims 17 and 18, **characterized in that** the conductor board (10) and/or the pole plate (13) are fully or partially insert-molded with a plastics covering (21).

## Revendications

1. Dispositif indicateur muni d'une graduation en forme d'arc de cercle le long de laquelle peut se déplacer l'extrémité libre d'une aiguille pouvant être entraînée en rotation autour d'un axe d'aiguille par un mécanisme de mesure, une roue dentée (2) montée rotative étant disposée en rotation solidaire sur un axe (1) qui entraîne directement ou indirectement l'axe d'aiguille, dans les dents de laquelle s'engrène partiellement la denture d'une couronne dentée oscillante (3) qui possède un diamètre supérieur à celui de la roue dentée (2), laquelle est montée de manière à pouvoir osciller autour de l'axe (1) de la roue dentée (2), **caractérisé en ce que** la couronne dentée oscillante (3) est sollicitée dans les dents de la roue dentée (2) dans le sens de l'engrenage de la denture de la couronne dentée oscillante (3) par des forces de ressort distribuées sur sa circonférence et elle est reliée à demeure à une bague ferromagnétique (4) qui s'étend dans le sens circonférentiel de la couronne dentée oscillante (3), avec au moins deux masses polaires (8) qui font saillie à travers des bobines pouvant être alimentées indépendamment l'une de l'autre vers la surface de l'enveloppe circonférentielle externe de la bague ferromagnétique (4) et qui sont disposées sur la circonférence de la bague ferromagnétique (4) avec un jeu radial par rapport à celle-ci.

2. Dispositif indicateur muni d'une graduation en forme d'arc de cercle le long duquel peut se déplacer l'extrémité libre d'une aiguille pouvant être entraînée en rotation autour d'un axe d'aiguille par un mécanisme de mesure, **caractérisé en ce qu'**une couronne à denture intérieure montée rotative est disposée en rotation solidaire sur un axe qui entraîne directement ou indirectement l'axe d'aiguille, dans les dents de laquelle s'engrène partiellement la denture d'une couronne à denture extérieure oscillante qui possède un diamètre inférieur à celui de la couronne à denture intérieure, qui est montée de manière à pouvoir osciller autour de l'axe de la couronne à denture intérieure, est sollicitée dans les dents de la couronne à denture intérieure dans le sens de l'engrenage de la denture de la couronne à denture extérieure oscillante par des forces de ressort distribuées sur sa circonférence et est reliée à demeure à une bague ferromagnétique qui s'étend dans le sens circonférentiel de la couronne à denture extérieure oscillante, avec au moins deux masses polaires qui font saillie à travers des bobines pouvant être alimentées indépendamment l'une de l'autre vers la surface de l'enveloppe circonférentielle interne de la bague ferromagnétique et qui sont disposées sur la circonférence de la bague avec un jeu radial par rapport à celle-ci.

3. Dispositif indicateur selon l'une des revendications précédentes, **caractérisé en ce que** la couronne dentée oscillante (3) ou la couronne à denture extérieure oscillante est réalisée monobloc avec la bague ferromagnétique (4).

4. Dispositif indicateur selon l'une des revendications précédentes, **caractérisé en ce que** les bobines sont des bobines planaires (11, 11', 11") déposées sur un circuit imprimé qui entourent, dans le circuit imprimé (10), des ouvertures de passage (12) à travers lesquelles font saillie les masses polaires (8).

5. Dispositif indicateur selon l'une des revendications précédentes, **caractérisé en ce que** la roue dentée (2) et la couronne dentée oscillante (3) ou la couronne à denture intérieure et la couronne à denture extérieure oscillante sont des roues dentées droites.

6. Dispositif indicateur selon l'une des revendications 1 à 3, **caractérisé en ce que** la roue dentée (2) et la couronne dentée oscillante (3) ou la couronne à denture intérieure et la couronne à denture extérieure oscillante sont des roues dentées coniques.

7. Dispositif indicateur selon l'une des revendications précédentes, **caractérisé en ce que** les masses polaires (8) sont reliées avec une plaque polaire (13) qui s'étend approximativement perpendiculairement aux masses polaires (8).

8. Dispositif indicateur selon la revendication 7, **caractérisé en ce que** les masses polaires (8) et la plaque polaire (13) sont réalisées monobloc.

9. Dispositif indicateur selon l'une des revendications précédentes, **caractérisé en ce que** les masses polaires (8) s'étendent au moins approximativement perpendiculairement au sens de l'engrenage des dents de la couronne dentée oscillante (3) ou de la couronne à denture extérieure oscillante dans la roue dentée (2) ou dans la couronne à denture intérieure.

10. Dispositif indicateur selon l'une des revendications 1 à 8, **caractérisé en ce que** les masses polaires (8) s'étendent au moins approximativement dans le même sens que le sens de l'engrenage des dents de la couronne dentée oscillante (3) ou de la couronne à denture extérieure oscillante dans la roue dentée (2) ou dans la couronne à denture intérieure.

11. Dispositif indicateur selon l'une des revendications précédentes, **caractérisé en ce que** la couronne dentée oscillante (3) ou la couronne à denture extérieure oscillante prend appui par le biais d'un ou plusieurs éléments élastiques (5) sur son côté qui est l'opposé du côté de l'engrenage de la denture de la couronne dentée oscillante (3) dans les dents de la roue dentée (2).

12. Dispositif indicateur selon la revendication 11, **caractérisé en ce que** la couronne dentée oscillante (3) ou la couronne à denture extérieure oscillante s'appuie sur les éléments élastiques (5) par le biais de la bague ferromagnétique (4).

13. Dispositif indicateur selon l'une des revendications précédentes, **caractérisé en ce que** le mécanisme de mesure composé de la roue dentée (2), de l'axe (1), de la couronne dentée oscillante (3), de la bague ferromagnétique (4) et des éléments élastiques (5) sont disposés dans un boîtier (16).

14. Dispositif indicateur selon la revendication 13, **caractérisé en ce que** le mécanisme de mesure est encapsulé par le boîtier (16).

15. Dispositif indicateur selon l'une des revendications 13 et 14, **caractérisé en ce que** le boîtier (16) se compose d'un fond (6) et d'un couvercle (15).

16. Dispositif indicateur selon la revendication 15, **caractérisé en ce que** le fond (6) possède des poches (7) qui accueillent les masses polaires (8) faisant saillie à l'intérieur du boîtier.

17. Dispositif indicateur selon l'une des revendications 15 et 16, **caractérisé en ce que** le circuit imprimé (10) s'appuie sur le côté du fond (6) qui se trouve à l'opposé de l'intérieur du boîtier (16).

18. Dispositif indicateur selon la revendication 17, **caractérisé en ce que** la plaque polaire (13) est disposée sur le côté du circuit imprimé (10) qui se trouve à l'opposé du boîtier (16).

19. Dispositif indicateur selon l'une des revendications 17 et 18, **caractérisé en ce que** le circuit imprimé (10) et/ou la plaque polaire (13) sont entièrement ou partiellement munis d'un surmoulage en matière plastique (21).
